# EUROPÄISCHE PATENTANMELDUNG

(11) **EP 1 061 346 A2**
(43) Veröffentlichungstag der Anmeldung: **20.12.2000**
(21) Anmeldenummer: 00112773.7
(22) Anmeldetag: 16.06.2000
(51) Int. Cl.: G01F 25/00

(54) **Prüfeinrichtung für einen Strömungsmelder**

(30) Priorität: 18.06.1999 DE 29910635 U
(71) Anmelder: Virotec Rohrtechnik GmbH & Co. KG, 63571 Gelnhausen (DE)
(72) Erfinder: Vieregge, Uwe, 63584 Gründau-Rothenbergen (DE)
(74) Vertreter: Stoffregen, Hans-Herbert, Dr. Dipl.-Phys.

(57) **Zusammenfassung**

Die Erfindung bezieht sich auf eine Prüfeinrichtung für einen in einem unter Druck stehenden Rohrleitungssystem (14) wie Sprinkleranlage angeordneten Strömungsmelder (12). Um bei einfachem Aufbau einen Prüfvorgang ohne Flüssigkeitsverlust durchführen zu können, wird vorgeschlagen, dass parallel zu dem Strömungsmelder (12) ein mit dem Rohleitungssystem (14) verbundener Bypass (24) angeordnet ist, in dem sich zumindest ein Förderaggregat (26) und zumindest ein Absperrorgan (28, 30) befindet.

## Beschreibung

Die Erfindung bezieht sich auf eine Prüfeinrichtung für einen in einem unter Druck stehenden Rohrleitungssystem wie Sprinkleranlage angeordneten Strömungsmelder.

Zum Schutz von Gefahrenbereichen, in denen mit einer schnellen Brandausbreitung zu rechnen ist, werden Sprinkler- bzw. Sprühwasser-Löschanlagen eingesetzt. Die Betriebsmittel der Sprinkleranlage wie Sprinklerpumpen, Sprinkler usw. sind über Rohrleitungen miteinander verbunden, die ständig mit Flüssigkeit wie Wasser gefüllt sind. Bei Austritt von Flüssigkeit aus dem Rohrleitungssystem, z. B. durch Öffnen eines Sprinklers im Brandfall oder durch eine Leckage, wird eine Strömung innerhalb des Rohrleitungssystems erzeugt, die von einem Strömungsmelder erfasst wird, der sodann ein Alarmsignal erzeugt. Dieses Alarmsignal kann dann z. B. der Feuerwehr zugeleitet werden. Ein Strömungsmelder und dessen Aufbau ist z. B. dem Prospekt "Waterflow Detectors", System Sensor; St. Charles, Illinois, U.S.A., zu entnehmen.

Nach dem Stand der Technik ist zur Prüfung des Strömungsmelders und zur Entleerung der Rohrleitung ein Absperrventil (Prüfventil) im Verlauf einer von der Rohrleitung ausgehenden Stichleitung vorgesehen. Der Strömungsmelder muss bei einem Druck zwischen 1,0 bis 3,0 bar ansprechen. Dem Absperrventil ist ein Druckmessgerät wie Manometer, eine Düse sowie ein Trichter nachgeordnet, durch den das entnommene Wasser aufgefangen wird. Eine derartige Prüfeinrichtung ist aufwendig und mit dem Nachteil behaftet, dass bei dem Prüfvorgang in dem Rohrleitungssystem enthaltenes Wasser verlorengeht.

Aus der DE 198 40 315 A1 ist ein Systemtrenner mit integrierter Signalabgabe für Feuerlöschanlagen bekannt. Dabei ist eine Bypassleitung vorgesehen, um bei erlaubten Druckschwankungen einen Fehlalarm auszuschließen.

Die DE 196 01 777 C2 nimmt auf eine stationäre Feuerlöschanlage Bezug, bei der die Möglichkeit besteht, mittels eines Differentialdruckwächters einen Druckabfall in einem Sprinklertrockenrohrnetz zu erfassen und diesen als Steuersignal zum Öffnen eines Löschventils zu nutzen.

Prüfeinrichtungen für Durchflussmesser sind aus der DE 33 47 695 C2 sowie der DE 32 39 281 C2 bekannt, bei denen Bypassleitungen benutzt werden, um die Durchflussmesser zu überprüfen. Die Bypassleitungen sind dabei in Reihe zu den Durchflussmessern geschaltet.

Der vorliegenden Erfindung liegt daher das Problem zugrunde, eine Prüfeinrichtung für Strömungsmelder derart weiterzubilden, dass diese bei einfachem Aufbau als komplette Einheit ausgebildet ist und dass ein Prüfvorgang ohne Flüssigkeitsverlust durchgeführt werden kann.

Das Problem wird erfindungsgemäß im Wesentlichen dadurch gelöst, dass parallel zu dem Strömungsmelder ein mit dem Rohrleitungssystem verbundener Bypass angeordnet ist, in dem sich zumindest ein Förderaggregat und zumindest eine Absperrorgan befinden.

Die Prüfeinrichtung umfasst nur wenige Komponenten und kann daher als komplette Einheit ausgebildet werden. Auch wird der Vorteil erreicht, dass beim Prüfvorgang keine Flüssigkeit aus dem Rohrleitungssystem entweicht, da die notwendige Strömung durch den Strömungsmelder durch das Förderaggregat erzeugt werden kann.

Bei einer besonders bevorzugten Ausführungsform ist der Strömungsmelder in einem in dem Rohrleitungssystem integrierten Rohrleitungsabschnitt angeordnet, wobei der Rohrleitungsabschnitt endseitige Aufnahmen für Verbindungselemente aufweist und wobei der Bypass mit dem zumindest einen Förderaggregat und der zumindest einen Absperrarmatur zusammen mit Abschnitten des Rohrleitungsabschnittes und dem Strömungsmelder einen Strömungskreislauf bildet.

Damit das Förderaggregat in dem Bypass ausgetauscht werden kann, sind zwei Absperrarmaturen vorgesehen, wobei das Förderaggregat zwischen den Absperrarmaturen angeordnet ist.

Zur Integration der Prüfeinrichtung in ein bestehendes Rohrleitungssystem sind Enden des Rohrleitungsabschnittes jeweils mit einer umlaufenden Nut bzw. Riefe zur Aufnahme der Verbindungselemente versehen.

Bei der bevorzugten Ausführungsform weist der den Strömungsmelder aufnehmenden Rohrleitungsabschnitt einen Durchmesser im Bereich von DN 50 bis DN 150 auf, wobei die Rohrleitungsabschnitte des Bypasses einen Durchmesser von vorzugsweise DN 25 aufweisen.

Das Förderaggregat ist vorzugsweise als Elektropumpe ausgebildet und kann den Strömungsmelder mit zwei Strömungsrichtungen beaufschlagen. Die Absperrarmaturen können als Absperrschieber ausgebildet sein.

Ergänzend kann in dem Bypass ein Druckmessgerät wie Manometer angeordnet sein, um zu gewährleisten, dass der Druck, mit dem der Strömungsmelder beaufschlagt wird, zwischen z. B. 1 und 3,6 bar beträgt.

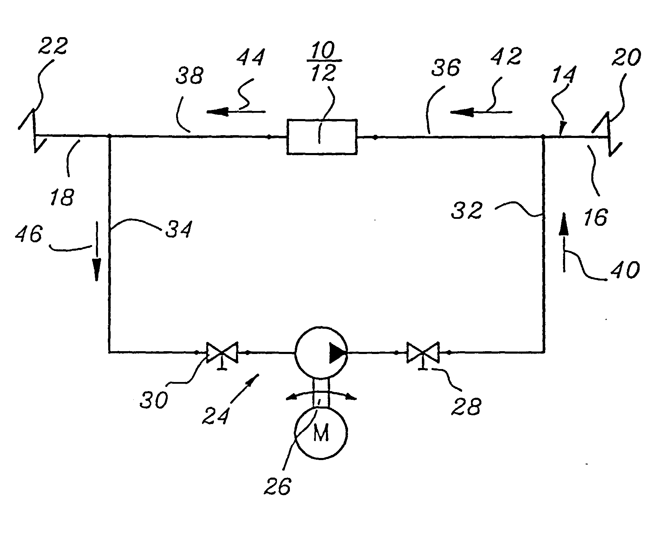

Weitere Einzelheiten, Vorteile und Merkmale der Erfindung ergeben sich nicht nur aus den Ansprüchen, den diesen zu entnehmenden Merkmalen -für sich und/oder in Kombination-, sondern auch aus der nachfolgenden Beschreibung eines der Zeichnung zu entnehmenden bevorzugten Ausführungsbeispiels.

Die einzige Fig. zeigt eine Prüfeinrichtung 10 für einen Strömungsmelder 12, der im Verlauf eines Rohrleitungsabschnittes 14 angeordnet ist. Der Rohrleitungsabschnitt 14 ist an seinen Enden 16, 18 vorzugsweise mit einer umlaufenden Nut bzw. Riefe 20, 22 versehen, damit die Prüfeinrichtung möglichst einfach in einem bestehenden Rohrleitungssystem, insbesondere in einer Sprinkleranlage über Verbindungselemente integriert werden kann.

Zur Prüfung des Strömungsmelders 12 ist erfindungsgemäß parallel zu dem Strömungsmelder 12 bzw. dem diesen aufnehmenden Rohrleitungsabschnitt 14 ein Bypass bzw. eine Prüfleitung 24 mit zumindest einem Förderaggregat wie Pumpe 26 und zumindest einer Absperrorgan wie -armatur 28 angeordnet.

In dem Ausführungsbeispiel umfasst der Bypass 24 ein weiteres Absperrorgan 30, wobei die Pumpe 26 zwischen den vorzugsweise als Absperrschieber ausgebildeten Absperrorganen 28, 30 angeordnet ist. Die Absperrorgane oder -armaturen 28, 30 sind über Rohrleitungsabschnitte 32, 34 jeweils mit einem in Strömungsrichtung vorderen Rohrleitungsabschnitt 36 bzw. in Strömungsrichtung hinteren Rohrleitungsabschnitt 38 verbunden.

Die Pumpe 26 ermöglicht bei geöffneten Absperrarmaturen 28, 30 eine Strömung in Richtung der Pfeile 40, 42, 44, 46 durch den Strömungsmelder 12, so dass der Strömungsmelder 12 mit einem Druck vorzugsweise zwischen 1,0 bis 3,6 bar beaufschlagbar ist. Innerhalb dieses Druckbereichs sollte der Strömungsmelder ansprechen, d. h. ein Alarmsignal auslösen. Die Prüfung des Strömungsmelders kann ohne Wasserverlust des Rohrleitungssystems durchgeführt werden. Auch besteht die Möglichkeit, die Pumpe 26 bei geschlossenen Absperrarmaturen 28, 30 aus der Prüfeinrichtung 10 zu entnehmen und in eine weitere Prüfeinrichtung zur Prüfung eines weiteren Strömungsmelders einzusetzen bzw. im Fall einer Störung zu warten bzw. auszutauschen.

Der Rohrleitungsabschnitt 14, in dessen Verlauf der Strömungsmelder 12 angeordnet ist, ist vorzugsweise mit einem Durchmesser in den Größen DN 50 bis DN 150 gefertigt. Dagegen sind die Rohrleitungsabschnitte 32, 34 des Bypasses 24 mit einem Durchmesser in der Größe von ca. DN 25 ausgeführt. Unabhängig von den Nennwerten der Rohre sollte der Durchmesser des dem Strömungsmelder aufweisenden Rohrleitungsabschnitts 14 in etwa 1-fach bis 10-fach, insbesondere 2-fach bis 6-fach größer als der des Bypasses sein.

Als besonderer Vorteil der Prüfeinrichtung 10 ist anzumerken, dass diese als komplette Einheit in ein bereits bestehendes Rohrleitungssystem integrierbar ist.

## Patentansprüche

1. Prüfeinrichtung (10) für einen in einem unter Druck stehenden Rohrleitungssystem (14) wie Sprinkleranlage angeordneten Strömungsmelder (12),
**dadurch gekennzeichnet,**
dass parallel zu dem Strömungsmelder (12) ein mit dem Rohleitungssystem (14) verbundener Bypass (24) angeordnet ist, in dem sich zumindest ein Förderaggregat (26) und zumindest ein Absperrorgan (28, 30) befindet.

2. Prüfeinrichtung (10) nach Anspruch 1,
**dadurch gekennzeichnet,**
dass der Strömungsmelder (12) in einem in dem Rohrleitungssystem integrierten Rohrleitungsabschnitt (14) angeordnet ist, dass der Rohrleitungsabschnitt (14) endseitige Aufnahmen (20, 22) für Verbindungselemente aufweist und dass der Bypass (24) mit dem Förderaggregat (26) zusammen mit Abschnitten (36, 38) des Rohrleitungsabschnittes (14) und dem Strömungsmelder (12) einen Strömungskreislauf bildet.

3. Prüfeinrichtung (10) nach Anspruch 1 oder 2,
**dadurch gekennzeichnet,**
dass der Bypass (24) zwei Absperrorgane wie Absperrarmaturen (28, 30) aufweist, zwischen denen das Förderaggregat (26) austauschbar angeordnet ist.

4. Prüfeinrichtung (10) nach zumindest einem der vorhergehenden Ansprüche,
**dadurch gekennzeichnet,**
dass Enden (16, 18) des Rohrleitungsabschnittes (14) jeweils eine umlaufende Nut bzw. Riefe (20, 22) zur Aufnahme der Verbindungselemente aufweisen.

5. Prüfeinrichtung (10) nach zumindest einem der vorhergehenden Ansprüche,
**dadurch gekennzeichnet,**
dass der Rohrleitungsabschnitt (14) einen Durchmesser x mit vorzugsweise DN 50 < x < DN 150 und der Bypass (24) Rohrleitungsabschnitte (32, 34) mit einem Durchmesser y mit vorzugsweise DN 25 aufweist, wobei insbesondere 1/6 ≤ y/x ≤ 1/2.

6. Prüfeinrichtung (10) nach zumindest einem der vorhergehenden Ansprüche,
**dadurch gekennzeichnet,**
dass sich die Durchmesser y/x verhalten wie 1/10 ≤ y/x ≤ 1/1.

7. Prüfeinrichtung (10) nach zumindest einem der vorhergehenden Ansprüche,
**dadurch gekennzeichnet,**
dass das Förderaggregat (26) als Elektropumpe ausgebildet ist.

8. Prüfeinrichtung (10) nach zumindest einem der vorhergehenden Ansprüche,
**dadurch gekennzeichnet,**
dass die Absperrarmaturen (28, 30) als Absperrschieber ausgebildet sind.

9. Prüfeinrichtung (10) nach zumindest einem der vorhergehenden Ansprüche,
**dadurch gekennzeichnet,**
dass in dem Bypass (24) ein Druckmessgerät wie Manometer angeordnet ist.

10. Sprinkleranlage mit in einem unter Druck stehenden Rohrleitungssystem (14) angordnetem Strömungsmelder (12),
**dadurch gekennzeichnet,**
dass parallel zu dem Strömungsmelder (12) eine Bypassleitung (24) verläuft, der mit dem Rohrleitungssystem (14) verbunden ist, und dass sich in der Bypassleitung zumindest ein Förderaggregat (26) und zwei Absperrorgane (28, 30) befinden, von den in Strömungsrichtung betrachtet eines vor und das hintere dem Förderaggregat angeordnet sind.
